Europäisches Patentamt

European Patent Office

Office européen des brevets

(11) Veröffentlichungsnummer: **0 297 467**

**A1**

(12) **EUROPÄISCHE PATENTANMELDUNG**

(21) Anmeldenummer: **88110159.6**

(22) Anmeldetag: **25.06.88**

(51) Int. Cl.⁴: **A01L 5/00 , A01L 11/00 , B29C 65/20**

(30) Priorität: **02.07.87 DE 3721856**
**27.02.88 DE 3806364**

(43) Veröffentlichungstag der Anmeldung:
**04.01.89 Patentblatt 89/01**

(84) Benannte Vertragsstaaten:
**ES FR GB IT**

(71) Anmelder: **Igrow, Sergej**
**Charlottenstrasse 30**
**D-2400 Lübeck(DE)**

(72) Erfinder: **Igrow, Sergej**
**Charlottenstrasse 30**
**D-2400 Lübeck(DE)**

(74) Vertreter: **Schaefer, Konrad**
**Gehölzweg 20**
**D-2000 Hamburg 70(DE)**

(54) **Vollkunststoffhufschuh für Pferde und Verfahren sowie Vorrichtung zu dessen Herstellung.**

㉗ Ein Vollkunststoffhufschuh für Pferde ist zweiteilig aus Sohle (1) und einem umlaufenden Band (3) bestehend ausgebildet, wobei das Band (3) an seinem unteren Rand (4) flanschartig nach außen verdickt ist, wobei an dem Flansch (3) zur Verbindung mit der Sohle (1) mit einer der Hufumfangsform anpaßbaren Stützlehre (15) angegriffen wird.

Fig 3

## Vollkunststoffhufschuh für Pferde und Verfahren sowie Vorrichtung zu dessen Herstellung.

Die Erfindung betrifft einen Vollkunststoffhufschuh nach dem Oberbegriff des Anspruches 1 sowie ein Verfahren und eine Vorrichtung zu dessen Herstellung.

Kunststoffhufschuhe für Pferde mit einem auf der Hufaußenfläche zu verklebenden Streifen und daran befestigter Sohle sind aus der Literatur bekannt, beispielsweise aus der DE-PS 34 41 417. Sie haben erhebliche Vorteile für das Pferd, da das mit Risiko behaftete Nageln des konventionellen Eisens vermieden wird und insbesondere auch die durch die Nagelverbindung mit dem starren Eisen sich ergebenden Bewegungseinschränkungen des Hufes vermieden werden, vielmehr in der elastischen Kunststoffkonstruktion der Huf die physiologisch notwendigen Eigenbewegungen ausführen kann.

Bei der genannten bekannten Konstruktion ist die Verbindung des Streifens mit der Sohle aber nur mittels eines Metallteiles möglich, das die Konstruktion verteuert und auch Verletzungsrisiken für das Pferd mit sich bringt. Vorteilhaft bei dieser Konstruktion ist dagegen aber die Möglichkeit, den Hufschuh individuelle dem Pferd angepaßt vorzufertigen und dann genau passend am Huf zu montieren. Die Montagezeit am nervösen Pferd wird verringert, und es ergibt sich ein hochexakter Sitz, der wichtig für die Langzeithaltbarkeit des Hufschuhes am Pferd ist, welche nur gewährleistet ist, wenn bei exaktem Sitz der zu verklebende Streifen exakt auf der Hufaußenwand sitzt.

Eine Vollkunststoffkonstruktion der eingangs genannten Art ist aus der US-PS 4 346 762 bekannt. Hierbei ist das Ideal des Vollkunststoffhufschuhes erreicht, der höchsten Tragekomfort für das Pferd bietet und durch Vermeidung von metallteilen keinerlei Verletzungsgefahren mehr aufweist. Auch diese Konstruktion besteht aus einem auf der Hufaußenfläche zu verklebenden Streifen, an dem die Sohle befestigt ist. Es handelt sich also um eine zweiteilige Konstruktion, die prinzipiell einfach herstellbar ist und die notwendigerweise unterschiedlichen Elastizitätseigenschaften von Sohle und Streifen auf einfache Weise gewährleisten kann. Der Streifen kann hochflexibel exakt der Hufaußenfläche anpaßbar gestaltet sein, während die Sohle schon aus Abriebgründen fester und starrer ausgeführt ist.

Bei dieser bekannten Konstruktion ist der auf der Hufaußenfläche zu verklebende Streifen an seinem unteren Ende L-förmig nach innen zu einem nach innen ragenden Flanschteil umgebogen, der von derselben Dicke wie der zu verklebende Streifenteil ist. Der Flanschteil liegt unter der Hufsohle und wird flächig mit der Sohle verbunden. Die Verbindung erfolgt bei dieser Konstruktion durch thermoplastisches Verschweißen, was hochfeste lang dauernde Haltbarkeit sicherstellt.

Nachteilig bei dieser Konstruktion sind aber zum einen die Haltbarkeit und zum anderen die äußerst ungünstige Anbringungsmöglichkeit am Huf.

Die Haltbarkeit ist bei dieser Konstruktion dadurch gefährdet, daß der Streifen, der zur sicher angepaßten Verklebung auf der Hufaußenfläche flexibel und somit auch dünn sein muß, auch im Eckbereich des "L" dünn sein muß. In diesem Bereich ist er bei längerem Tragen abriebgefährdet, kann also durchgescheuert werden. Infolge der hohen Zugbelastungen an dieser Stelle kann es bei sicherer Verklebung zum Abreißen kommen. Das Abreißen wird begünstigt durch die auftretenden Scherkräfte zwischen dem Huf und der Sohle des Hufschuhes, also Bewegungen in Ebene der Sohle, die sich beim Laufen ergeben. Dabei drückt der Huf seitlich gegen den Streifen und kann diesen im Bereich der Ecke des "L" in Verstärkung des oben erwähnten Effektes abreißen. Bei zu starken Scherbewegungen zwischen dem Hufschuh und dem Huf kann es auch zum Abreißen des Streifens an den Verklebestellen auf der Hufaußenfläche kommen.

Die Anbringung der bekannten Hufschuhkonstruktion am Pferd ist sehr unglücklich gelöst. Bei dieser Konstruktion muß zunächst der Streifen auf der Hufaußenfläche verklebt werden. Sodann wird die Unterseite des nach innen weisenden Flansches des "L" mit der oberen Fläche der Sohle durch Spiegelschweißen thermoplastisch verschweißt. Nach Ansicht von Fachleuten dürfte es aber kaum möglich sein, an einem lebenden, insbesondere einem nervösen Pferd mit einem über 200° heißen Schweißspiegel eine exakte Verschweißung zustandezubringen. Diese Konstruktion dürfte aus diesem Grunde nur theoretischen Wert haben.

Andererseits ist eine andere Anbringungsmöglichkeit bei dieser Konstruktion nicht möglich. Beim Schweißvorgang muß zwischen Sohle und Streifen ein Preßdruck hergestellt werden. Der Streifen bietet aber in Richtung des Preßdruckes keine anderen Angriffsmöglichkeiten als auf der Oberseite des nach innen weisenden Flansches des "L". An dieser Stelle kann aber nach dem Kenntnisstand dieses Standes der Technik nur mit dem Huf selbst angegriffen werden, da dieser den idealen Druckstempel liefert und zum anderen die exakte Paßform sicherstellt.

Die Aufgabe der vorliegenden Erfindung besteht daher darin, einen Hufschuh der eingangs genannten art zu schaffen, der bei verbesserter Haltbarkeit einfacher anbringbar ist.

Diese Aufgabe wird erfindungsgemäß mit den Merkmalen des Kennzeichnungsteiles des Anspruches 1 gelöst.

Der erfindungsgemäß vorgesehene Flansch ergibt gegenüber den Laschen eine erhebliche Vergrößerung der Wandstärke. Im unteren Randbereich des Hufes unmittelbar über der Sohle wird also umlaufend um die Sole ein mit dieser fest verbundener verstärkter Bereich geschaffen, der zum einen erheblich länger braucht, bevor er beim Laufen durchgescheuert ist, und der zum anderen dem Huf gegen seitliche Scherbewegungen erheblich besseren Halt vermittelt als die bekannte Konstruktion. Beide Effekte addieren sich in einer stark verbesserten Langzeithaltbarkeit des Hufschuhes.

Die Verbindung zwischen Streifen und Sohle ist mit hoher Festigkeit in Form einer Verklebung oder einer thermoplastischen Verschweißung vorgesehen. Bei der Herstellung dieser Verbindung ist der nach außen die Laschen überragende Flansch von großem Vorteil, da an ihm ein geeignetes Werkzeug angreifen und die zur Verbindung erforderliche Preßkraft gegen die Sohle aufbringen kann. Es ist daher nicht erforderlich, am Pferd zu arbeiten. Die Verbindung kann vielmehr auf der Werkbank viel präziser und sicherer geschaffen werden. Ein geeignetes Werkzeug kann am Flansch derart angreifen, daß es diesen beim Verbindevorgang sowohl in Richtung der Preßkraft gegen die anzudrückende Sohle abstützt als auch von außen gegen den Umfang des Flansches in der genau zur Hufumfangsform passenden Form hält, wobei sich der Flansch des aus einem Endlosstreifen zugeschnittenen Streifenstückes elastisch gegen des Werkzeug legt.

Vorteilhaft sind dabei die Merkmale des Anspruches 2 vorgesehen. Bei einer Klebeverbindung von Oberteil und Unterteil des Hufschuhes sorgt der nutförmige Eingriff einer der bei den zu verbindenden Flächen in die Gegenfläche zum einen für eine Vergrößerung der Klebeflächen und somit verbesserte Festigkeit und ergibt zum anderen eine gute seitliche Führung der zu verklebenden Teile aneinander, so daß unter Umständen weniger komplizierte Haltewerkzeuge beim Anpressen benötigt werden und insbesondere des korrekte Anlegen des Bandes an die Sohle durch den Nuteingriff erleichtert wird.

Ein erfindungsgemäßes Verfahren zur Herstellung des Hufschuhes ist in Anspruch 3 angegeben. Gegenüber dem genannten Stand der Technik zeichnet dieses Verfahren sich zunächst dadurch aus, daß die Verbindung außerhalb des Pferdes erfolgt. Dabei wird eine Stützlehre zum Halten des Streifens am Flansch verwendet, die diesen sowohl gegen die zum Verbinden erforderliche Preßkraft abstützt als auch nach Art einer Lehre in der gewünschten individuellen Umfangsform hält, um den exakten Sitz des fertigen Hufschuhes zu gewährleisten.

Dabei sind vorteilhaft die Merkmale des Anspruches 4 vorgesehen. Auf diese Weise wird die Übertragung der individuellen Hufform auf die Lehre stark erleichtert. Zunächst wird nach der Hufform die Formplatte geschnitten, die beispielsweise nach Aufsetzen des Hufes und Abzeichnen der Umfangslinie ausgeschnitten wird. Um diese wird das Band gespannt, beispielsweise mittels eines Gummibandes oder durch provisorisches Verkleben. Nun kann die Stützlehre sicher und einfach genau dem Band, also der gewünschten Form angepaßt werden, wobei gleichzeitig der sichere Eingriff mit dem Flansch des Bandes und die exakte Formlage des Bandes sichergestellt werden.

Ferner sind dabei vorteilhaft die Merkmale des Anspruches 5 vorgesehen. Auf diese Weise können erforderliche unterschiedliche Wärmeeinwirkzeiten gewährleistet werden, die beispielsweise aufgrund unterschiedlicher Materialwahl und unterschiedlicher Masse erforderlich sein können, wobei zumeist die dickere Sohle länger wärmebeaufschlagt werden muß. Es wird hierdurch sichergestellt, daß die beiden zu verschweißenden Oberflächen jeweils nur bis zur erforderlichen Einschmelztiefe erweicht werden.

Eine erfindungsgemäße Vorrichtung zur Durchführung des erfindungsgemäßen Verfahrens ist vorteilhaft durch die Merkmale des Anspruches 6, gegebenenfalls unter vorteilhafter Hinzuziehung der Merkmale der Ansprüche 7 bis 12 gekennzeichnet. Vorrichtungen dieser Art haben sich in Versuchen als einfach und unkompliziert sowie präzise arbeitend herausgestellt.

In den Zeichnungen ist die Erfindung beispielsweise und schematisch dargestellt. Es zeigen:

Fig. 1 die Seitenansicht eines an einem Huf montierten erfindungsgemäßen Hufschuhes,

Fig. 2 eine Sohlenansicht zu Fig. 1,

Fig. 3 eine perspektivische Ansicht des Hufschuhes der Fig. 1 und 2,

Fig. 4 einen Schnitt durch den Hufschuh der Fig. 3 mit Huf,

Fig. 5 die Seitenansicht einer erfindungsgemäßen Schweißvorrichtung,

Fig. 6 eine Draufsicht auf die Stützlehre der Schweißvorrichtung gemäß Fig. 5 und

Fig. 7 einen Schnitt entsprechend Fig. 4 durch eine Ausführungsform des Hufschuhes mit Nuteingriff der zu verklebenden Flächen.

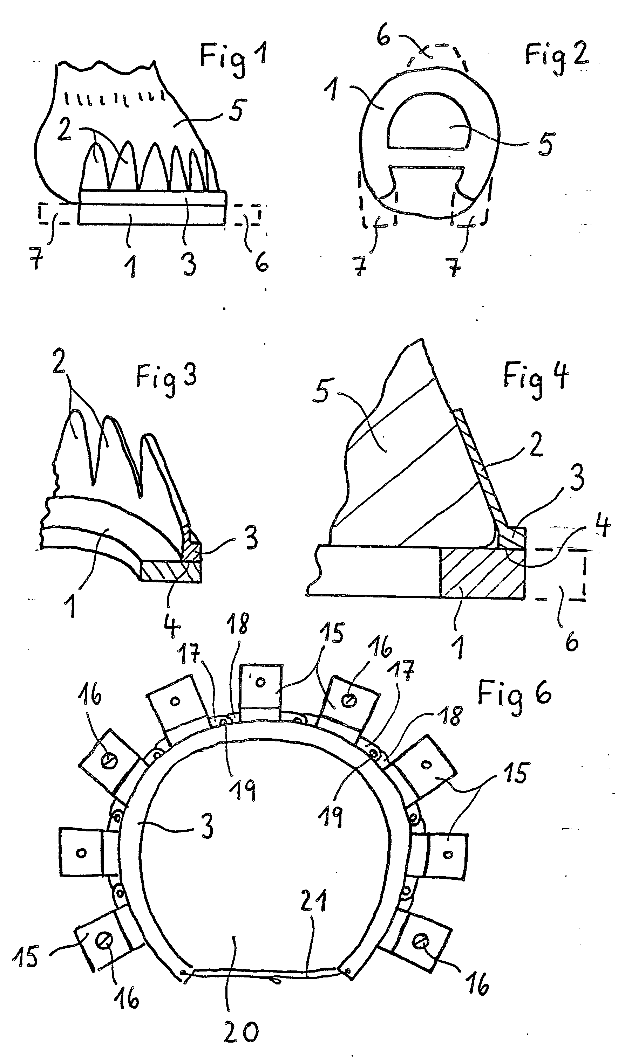

Die Fig. 1 bis 4 dienen zur Erläuterung der Konstruktion des Hufschuhes. Dieser Weist eine Sohle 1 auf, die, wie insbesondere Fig. 2 erkennen läßt, von hufeisenförmiger Grundform ist und im Bereich der hinteren offenen Enden in üblicher Weise mit einem Querriegel geschlossen sein kann, um ein Aufspreizen zu verhindern. Die Sohle 1 ist vorzugsweise aus einer Kunststoffplatte entsprechend den Hufmaßen zugeschnitten, kann aber auch zumindest grob passend als Rohling vorgefertigt sein.

Auf der Sohle ist ein umlaufender Streifen vorgesehen, der an seiner Unterseite als durchlaufendes Band ausgebildet ist, von dem relativ dünnwandige Laschen 2 nach oben ausgehen. Das durchlaufende Band ist als gegenüber den Laschen 2 nach außen (in bezug auf den Huf) ragender Flansch 3 wesentlich verdickt ausgebildet. Die untere Stirnfläche 4 des als Flansch 3 ausgebildeten durchlaufenden Bandes ist mit der Oberseite der Sohle 1 im Bereich von deren Außenrand flächig verbunden.

Aus den Fig. 1 und 4 ist die Befestigung an einem Pferdehuf 5 ersichtlich. Nach Überstülpen des Hufschuhes auf den Huf sind die Laschen 2 mit ihren Innenflächen auf der Hufaußenseite flächig verklebt. Die Sohle 1 sitzt dabei ohne Verklebung unter dem Huf und bildet die Aufstandfläche für diesen.

Aus den Figuren ist erkennbar, daß bei exakter Anpassung des Hufschuhes an den Huf ein sicherer Sitz gewährleistet ist. Die dünnen flexiblen Laschen lassen sich auch einer unebenen Hufaußenfläche vollflächig anlegen und somit sicher verkleben. Der Flansch 3 umläuft bei exakter Anpassung den Rand des Hufes und stützt diesen seitlich bei Laufbewegungen ab, wobei er aufgrund seiner großen Dicke hohe Kräfte aufnehmen und auf die formstabilere Sohle 1 übertragen kann. Wie insbesondere Fig. 4 erkennen läßt, wird die Verbindung durch die guten Angriffsmöglichkeiten am Flansch 3 verbessert, an dem von oben zur Erzeugung der Schweißpreßkraft angegriffen werden kann.

Wie in den Fig. 1 bis 4 nicht gesondert dargestellt, kann in der Ebene der Stirnfläche 4, also an der Verbindungsstelle eine die gesamte Sohle 1 überspannende dünne Kunststoffolie zwischengelegt werden, die bei der Verbindung der beiden Teile eingebunden wird.

Wie in den Fig. 1, 2 und 4 dargestellt, muß bei der erfindungsgemäßen Konstruktion die Umfangsform der Sohle 1 nicht mit der durch die Umfangsform des Hufes 5 bedingten Umfangsform des Flansches 3 übereinstimmen. Aus orthopädischen Gründen kann die Sohle 1 an bestimmten Stellen, die sich insbesondere aus Fig. 2 ergeben, über die Umfangsform des Hufes hinausragen. So kann mit einem vorderen gestrichelt dargestellten Vorsprung 6, dem sogenannten Bockhuf, vorgebeugt werden. Aus anderen Gründen können hintere Verlängerungen 7 (gestrichelt dargestellt) vorgeshen sein.

Fig. 5 zeigt eine Schweißvorrichtung zur Herstellung des in den Fig. 1 bis 4 dargestellten Hufschuhes.

Auf einer Grundplatte 8 mit ebener Oberfläche ist eine zylindrische Säule 9 stehend befestigt. Von dieser wird ein Arm 10 feststehend getragen, an dessen Ende über der Grundplatte 8 in einer Führung 11 eine senkrecht zur Platte 8 verschiebbare Stange 12 gehalten wird. Am unteren Ende der Stange 12 ist über eine leicht winkelnachgebende Verbindung 13 eine Andruckplatte 14 mit ebener Unterfläche befestigt, unter der die Sohle 1 zum Schweißvorgang gehalten wird. Um thermisch bedingte Verwerfungen der Sohle 1 beim Schweißvorgang zu verhindern und die Sohle zu halten, wird die Sohle mit geeigneten Mitteln auf der ebenen Unterseite der Andruckplatte 14 gehalten, beispielsweise durch gestrichelt angedeutete Schraubverbindungen, geeignete Klammern, Saugeinrichtungen od. dgl..

Der auf der Sohle 1 zu verschweißende Streifen, bestehend aus Laschen 2 und Flansch 3, wird über der Grundplatte 8 gehalten.

Dazu ist eine Stützlehre vorgesehen, die im dargestellten bevorzugten Ausführungsbeispiel aus einer Kette einzelner Stützen 15 besteht.

Die Stützen 15 sind im Schnitt L-förmig ausgebildet mit einem aufragenden Teil und einem sich auf der Platte 8 erstreckenden Fußteil. Am Fußteil sind sie mit Schrauben 16, die in Fig. 5 gestrichelt angedeutet sind und in Fig. 6 mit ihren Köpfen erkennbar sind, mit der Grundplatte 8 verbunden. Da die Stützen an unterschiedlichen Stellen mit der Grundplatte verbindbar sein müssen, ist die Grundplatte 8 in nicht dargestellter Weise mit geeigneten Befestigungsaufnahmen ausgerüstet, beispielsweise mit den üblichen T-Nuten, mit einer größeren Anzahl von Löchern od. dgl..

Es muß hier zu den Zeichnungen der Fig. 5 und 6 angemerkt werden, daß in Fig. 6 sämtliche erforderlichen Stützen 15 in Draufsicht dargestellt sind, in Fig. 5 aber nur vier Stützen, um die Übersichtlichkeit der Zeichnung zu verbessern, eine davon aus Übersichtlichkeitsgründen geschnitten. Ebenso ist auch die Darstellung der Laschen 2 in Fig. 5 stark vereinfacht. Es sind nur die beiden in der Zeichnungsebene liegenden Laschen geschnitten dargestellt, die übrigen Laschen aber der zeichnerischen Einfachheit haber weggelassen.

An ihrem oberen Ende weisen die Stützen 15 eine rechtwinklig eingeschnittene Ecke auf, die auf Fig. 5 ersichtlich ist. In diese, jeweils aus zwei rechtwinkligen Flächen bestehende Ecke paßt die durch den Flansch 3 gebildete Außenkante, wie dies in Eingriff in Fig. 5 dargestellt ist. In der Lage der Fig. 5 wird also der Flansch 3 von den Stützen 15 sowohl von unten sicher abgestützt als auch von außen.

Wird, wie in Fig. 6 dargestellt, eine Reihe von Stützen 15 (im Darstellungsfalle neun Stück) in der erforderlichen, dem Huf angepaßten Lage aufgestellt und werden die Stützen an der Grundplatte 8 befestigt, so kann der aus Laschen 2 und Flansch 3 bestehende Streifen in die durch die Stützen 15 gebildete Stützlehre eingelegt werden und wird dabei sicher in der erforderlichen Umfangsform gehalten. Zum Verschweißen kann die Sohle 1 gegen die Stirnfläche 4 des Flansches 3 gepreßt werden, ohne daß die vorgegebene Umfangsform des Flansches 3 gestört wird. Durch den Eingriff mehrerer über den Umfang verteilter Stützen 15 wird ferner eine über die gesamte Fläche gleichmäßig gute Verschweißung gesichert.

Die Stützen 15 können einzeln, also völlig voneinander getrennt auf der Grundplatte 8 in der gewünschten Weise angeordnet werden. Vorteilhaft sind die Stützen 15 aber in der dargestellten Weise kettenartig miteinander verbunden. Dazu sind jeweils zu beiden Seiten der Stützen 15 die in den Figuren dargestellten Kettenlaschen 17 (doppelt) bzw. 18 (einzeln) vorgesehen und durch Achsstifte 19 in geeignet vorgesehenen Bohrungen verbunden.

Auf diese Wiese können die Stützen 15 nach Art einer Kette sehr viel einfacher gehandhabt werden. Wie Fig. 6 zeigt, ist es auch nicht mehr erforderlich, alle Stützen einzeln mit der Grundplatte 8 zu verbinden. Es reicht aus, einzelne (im Fall der Fig. 6 vier Stützen) mit Schrauben 16 an der Grundplatte 8 zu befestigen. Die dazwischenliegenden Stützen werden durch die Kettenverbindung sicher an ihrem Platz gehalten.

Um die exakt dem Huf 5 angepaßte Form des Flansches 3 an den Stützen 15 einfacher einstellen zu können, ist als Montagehilfe eine Formplatte 20 vorgesehen. Diese ist in ihrem Umfang exakt zur Umfangsform des Hufes zugeschnitten. Sie kann beispielsweise aus fester Pappe bestehen. Der Flansch 3 ist um den Umfang der Formscheibe 20 gelegt und zum sicheren Sitz beispielsweise an den hinteren Enden mit einem Gummiband 21 (Fig. 6) gespannt. In dieser Anordnung ist die gewünschte Umfangsform des Flansches 3 sicher vorgegeben, und es können die Stützen 15 in erforderlicher Lage darum herum angeordnet werden und genau der gewünschten Lage angepaßt werden.

Die in Fig. 5 dargestellte Schweißvorrichtung arbeitet nach dem Spiegelschweißverfahren. Ein Schweißspiegel 22 mit ebenen Ober- und Unterflächen, der beispielsweise elektrisch auf geeignete Plastifizierungstemperatur aufgeheizt wird, ist auf der Säule 9 schwenkbar und höhenverschiebbar gelagert. Zum Aufheizen der zu verschweißenden Teile 1 und 3 wird er zwischen diese geschwenkt. Nach Aufheizen der Teile wird er seitlich ausgeschwenkt, so daß die übereinanderliegenden, zu verschweißenden Teile 1 und 3 aufeinandergepreßt werden können. Dabei ist zuvor sicherzustellen, beispielsweise durch vorheriges Ausprobieren, daß die Stützen 5 derart angeordnet sind, daß Sohle 1 und Flansch 3 genau aufeinanderpassen. Zur Erleichterung können noch eine nachträgliche Justierung zulassende, nicht dargestellte Einrichtungen vorgesehen sein.

Im dargestellten Ausführungsbeispiel ist ohne weiteres ersichtlich, daß die sehr dicke Sohle 1 eine längere Aufheizzeit benötigt als der Flansch 3 von wesentlich geringerem Querschnitt. Um dies zu ermöglichen, ist auf der Säule 9 ein um diese schwenkbarer Anschlag 23 vorgesehen, der sich auf der Grundplatte 8 abstützt und zwei Anschlagflächen 24 und 25 unterschiedlicher Höhe über der Grundplatte 8 aufweist. An einem Arm ist eine Anschlagfläche 24 vorgesehen, mit der der Schweißspiegel 22 oberhalb des Flansches 3 gehalten wird. In dieser Stellung kann durch Andrük-ken zunächst die Sohle 1 bis zur Plastifizierung aufgeheizt werden. Sodann wird durch Drehen des Anschlages 23 die Anschlagfläche 24 nach außen außer Eingriff geschwenkt und der Spiegel auf die Stirnfläche 4 des Flansches 3 abgesenkt, um diese zu erwärmen. Gleichzeitig kann durch weiteres Andrücken die Sohle 1 weiter aufgeheizt werden.

Die zweite Anschlagfläche 25, an der der Schweißspiegel 22 nach Ausschwenken der Anschlagfläche 24 in Eingriff kommt, liegt etwas niedriger als die Stirnfläche 4 des Flansches 3, wenn dieser in den Stützen 15 gehalten ist, und dient zur Begrenzung der Einschmelztiefe bei Anlage des Schweißspiegels 22 am Flansch 3.

In der dargestellten bevorzugten Ausführungsvariante wird der erfindungsgemäße Hufschuh wie folgt hergestellt:

Zunächst wird aus einer Kunststoffplatte geeigneter Dicke die Sohle 1 etwa in der aus Fig. 2 ersichtlichen Form ausgeschnitten. Die Sohle kann sofort oder später im Verfahrensgang unter der Andruckplatte 14 der Schweißvorrichtung z. B. mittels der dargestellten Schrauben befestigt werden.

Die zu bearbeitenden Hufe 5 des Pferdes werden in ihrer häufig stark voneinander abweichenden individuellen Form vermessen, und zwar auf einfache Weise dadurch, daß der Huf auf eine Platte, beispielsweise eine Pappe, gestellt und am Umfang mit einem Bleistift abgezeichnet wird. Die abgezeichnete Form wird ausgeschnitten und ergibt die Formplatte 20, die exakt dem Hufumfang wiedergibt.

Aus einem angelieferten geraden Endlosstreifen 2, 3 wird ein Stück passender Länge abgeschnitten und um die Formplatte 20 gelegt, wie dies aus den Fig. 5 und 6 ersicht lich ist. Der Streifen kann am Umfang der Formplatte durch provisorische Verklebung gesichert sein oder umgespannt sein, beispielsweise mit dem Gummiband 21, das die Fig. 6 zeigt.

Die Formplatte 20 mit dem daran befestigten streifen wird nun in die Schweißvorrichtung der Fig. 5 gebracht und etwa in der dargestellten Lage über der Grundplatte 8 gehalten. Die einzelnen Stützen 15 werden nun angelegt, wobei insbesondere durch die kettengliedartige Verbindung der Stutzen dieses Anlegen stark vereinfacht wird. Unter Umständen ergibt sich auch ohne Befestigung der Stützen 15 auf der Grundplatte 8 bzw. mit nur leichtem Halten einiger der Stützen bereits eine ausreichend sichere Abstützung des Flansches 3, die für das Verschweißen ausreicht. Beim Justieren der Stützen 15 ist dafür Sorge zu tragen, daß die korrekte Orientierung des Streifens in bezug auf die Sohle eingestellt wird. Mit geeigneten, in Fig. 5 nicht dargestellten Einrichtungen kann auch nachträglich die Justierlage hergestellt werden. Nun wird bei in Stellung gemäß Fig. 5 stehendem Anschlag 23 der eingeschaltete Schweißspiegel 22 in die dargestellte Stellung geschwenkt, und es wird zunächst durch Absenken der Sohle 1 deren untere Seite plastifiziert, die aufgrund der großen Masse etwas länger braucht. Sodann wird der Anschlag 23 umgestellt, so daß der Schweißspiegel 22 auf die zu verschweißende Stirnfläche 4 des Flansches 3 absinkt und diese plastifiziert. Dann wird nach kurzzeitigem Anheben der Sohle 1 der Spiegel 22 weggeschwenkt und die an ihrer Unterseite plastifizierte Sohle 1 auf den an der Stützfläche 4 plastifizierten Flansch 3 abgesenkt und im erforderlichen Maße angedrückt. Nach kurzzeitigem Andrücken ist die Verschweißung gesichert, und der fertige Hufschuh kann demontiert werden.

Bei diesem Schweißvorgang kann auf sehr einfache Weise die bereits erwähnte dünne Kunststoffolie 26, die in Fig. 5 dargestellt ist, zwischen den beiden zu verschweißenden Teilen eingelegt und mit verschweißt werden.

Gegenüber der dargestellten Ausführungsform sind sowohl hinsichtlich der Konstruktion des Hufschuhes als auch der Einzelheiten des Verfahrensablaufes und der Konstruktion der Schweißvorrichtung Varianten im Rahmen der vorliegenden Erfindung möglich. So kann beispielsweise bei der Konstruktion des Hufschuhes der insbesondere aus Fig. 4 ersichtliche Querschnitt des Flansches 3 variiert werden, wobei beispielsweise seine zum Eingriff mit den Stützen 15 bestimmte Außenkante anders ausgestaltet werden kann, beispielsweise verrundet, wodurch der sichere Eingriff in der Ecke der Stützen nicht wesentlich verschlechtert wird, oder es kann die Kante des Flansches 3 etwas nach oben gezogen verstärkt zu sicherem Formschlußeingriff mit der entsprechend auszubildenden Ecke an den Stützen 15 ausgebildet sein.

Die zur Montage sehr vorteilhafte Kettenverbindung der Stützen 15 kann auch anders gelöst sein, beispielsweise mittels eines an den Stützen befestigten flexiblen Bandes od. dgl.. Die Befestigung der Stützen 15 an der Grundplatte 8 kann auf verschiedene Weise gelöst werden, beispielsweise auch durch einschaltbare magnetische Halterung.

Die Stützen 15 können auch auf andere Weise in einer Ebene gehalten werden, beispielsweise an Schwenkarmen od.dgl..

Die in den Figuren 5 und 6 dargestellte Schweißvorrichtung kann in vereinfachter Ausbildung auch hervorragend für andere Arten der Verbindung zwischen Flansch 3 und Sohle 1 verwendet werden, die auf Basis einer Verklebung erfolgen.

Bei dem zuvor beschriebenen thermoplastischen Verschweißen sind die Materialien des Flansches 3 und der Sohle 1 so zu wählen, daß sie thermoplastisch verschweißbar sind. Wird dagegen verklebt, so können geeignete Kunststoffmaterialien verwendet werden, für die geeignete Klebverbindungsmöglichkeiten verfügbar sind. Diese können, abhängig vom verwendeten Material, einen Klebstoff oder auch Löse- bzw. Quellmittel verwenden, die zwischen der zu verklebenden Oberfläche der Sohle 1 und der Stirnfläche 4 des Flansches 3 einzubringen sind. Gegebenenfalls kann die Verklebung unter Wärmeeinwirkung hinsichtlich der Abbindezeit und der Endfestigkeit verbessert werden.

Die in den Fig. 5 und 6 dargestellte Vorrichtung kann für diese Zwecke hervorragend verwendet werden, da es auch bei der Verklebung darauf ankommt, den Flansch 3 paßgenau in der Umfangsform des Hufes zu Halten und dabei die beim Verkleben erforderliche Halte- bzw. Preßkraft zwischen Flansch 3 und Sohle 1 aufzubringen.

Es wird lediglich gemäß Fig. 5 auf den Schweißspiegel 22 verzichtet. Bei der Stellung von Sohle 1 und Flansch 3 gemäß Fig. 5 kann von Hand bzw. mit einer geeigneten Auftrageeinrichtung das zur Verbindung erforderliche Mittel auf eine der zu verbindenden Flächen aufgebracht werden, beispielsweise auf die Stirnfläche 4 des Flansches 3. Sodann wird in der oben beim Schweißvorgang beschriebenen Weise zusammengepreßt. Auch beim Kleben kann die Kunststoffolie 26 mit eingebunden werden, die dann beidseitig verklebt wird.

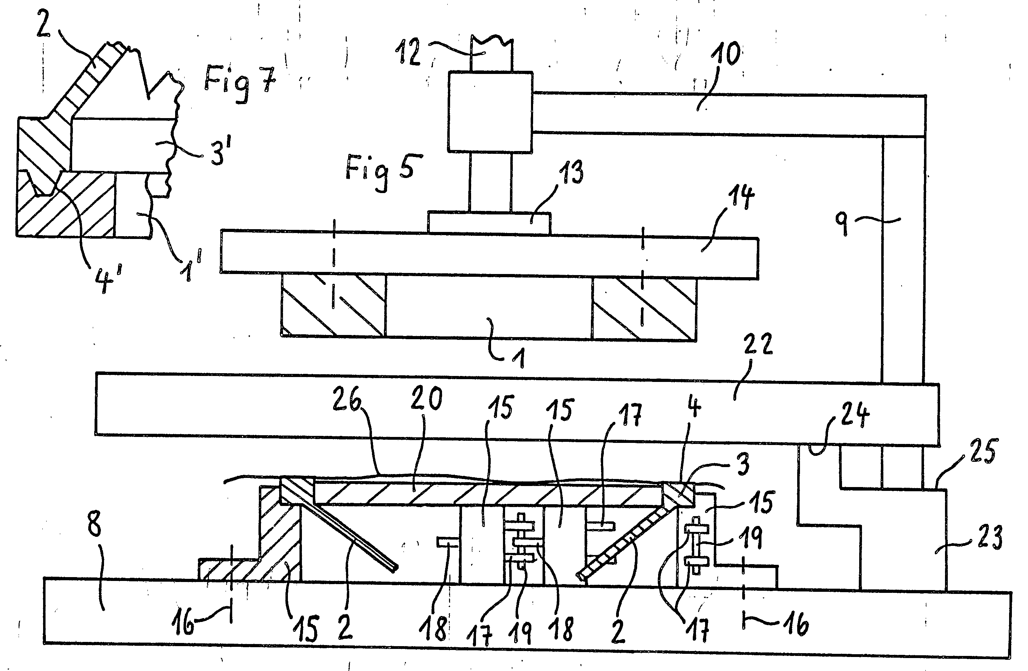

Fig. 7 zeigt in einem Schnitt entsprechend dem der Fig. 4 eine Ausführungsform des Hufschuhes, bei dem die zu verbindenden Flächen von Oberteil und Unterteil, also die untere Stirnfläche des die Laschen verbindenden Bandes 3' und die Oberseite der Sohle 1' nicht flach ausgebildet sind wie bei der Konstruktion gemäß Fig. 4.

Bei der Konstruktion der Fig. 7 ist die Stirnfläche 4' des Bandes 3' mit einer nach unten ragenden Feder versehen, die, wie die Schnittzeichnung zeigt, sich nach unten konisch verjüngt. Eine entsprechende Nut ist in der Oberseite der Sohle 1' angeordnet. Sowohl die Nut als auch die Feder verlaufen passend zueinander um die gesamte Sohle 1' herum.

Durch diesen Nuteingriff ergibt sich zum einen eine Vergrößerung der miteinander zu verbindenden Flächen. Diese Konstruktion ist für Klebeverbindung vorgesehen, wobei die Vergrößerung der Klebeflächen für wesentliche Verbesserung der Abreißfestigkeit sorgt. Der Nuteingriff ergibt ferner eine Sperrwirkung gegen Verschieben des Bandes 3' auf der Oberfläche der Sohle 1', und zwar dann, wenn bei noch flüssigem Kleber das Band 3' auf die Sohle 1' aufgesetzt wird. Der Nuteingriff sichert dann genau die korrekte Lage der zu verklebenden Teile aneinander, so daß hierdurch die Montage vereinfacht wird.

Die Ausführungsform nach Fig. 7 kann dahingehend variiert werden, daß die Nut/Feder-Anordnung umgekehrt ist, also die Feder von der Sohle 1' aufragt und die Nut in der Stirnfläche 4' des Bandes 3' vorgesehen ist.

## Ansprüche

1. Vollkunststoffhufschuh für Pferde, aus durch Kleben oder Schweißen verbindbarem Material, mit einer im wesentlichen hufeisenförmig geformten Sohle aus dickem Material geringer Elastizität und einem die Hufaußenfläche umfassenden, zur Verklebung mit dieser bestimmten, stärker elastischen Streifen, dessen untere Stirnfläche mit der Oberseite der Sohle verbunden ist, dadurch gekennzeichnet, daß der Streifen aus einem unteren durchgehenden Band (3) besteht, von dem nach oben verlaufende dünnwandige Laschen (2) integral ausgehen, wobei das Band gegenüber den Laschen unter Ausbildung eines nach außen vorspringenden Flansches (3) verdickt ist.

2. Geklebter Hufschuh nach Anspruch 1, dadurch gekennzeichnet, daß die untere Stirnfläche des Bandes (3') und die mit dieser verklebte Oberseite der Sohle (1') nutförmig ineinandergreifend ausgebildet sind.

3. Verfahren zur Herstellung eines Hufschuhes nach einem der vorhergehenden Ansprüche, dadurch gekennzeichnet, daß vor Anbringung des Hufschuhes am Huf (5) Band (3) und Sohle (1) verbunden werden, wobei das Band (3) in einer Stützlehre (15) gehalten wird, die in individueller Anpassung an die Hufumfangsform den Flansch (3) seitlich und gegen die Preßkraft abstützt.

4. Verfahren nach Anspruch 3, dadurch gekennzeichnet, daß aus einem Plattenmaterial nach der Umfangsform des Hufes (5) eine Formplatte (20) geschnitten wird, daß das Band (3) mit seiner Innenseite um den Rand der Formplatte gespannt wird und daß dann das Band mit der Formplatte in die Stützlehre (15) eingelegt wird, wobei diese der durch die Formplatte vorgegebenen Umfangsform angepaßt wird.

5. Verfahren nach einem der vorhergehenden Ansprüche, dadurch gekennzeichnet, daß beim Spiegelschweißen durch getrenntes Andrücken an den Spiegel (22) die Sohle (1) länger wärmebeaufschlagt wird als das Band (3).

6. Vorrichtung zur Durchführung des Verfahrens nach einem der vorhergehenden Ansprüche, dadurch gekennzeichnet, daß an einem Gestell (8, 9, 10) die Stützlehre (15) in einer Ebene umfangsformverstellbar sowie feststellbar gehalten ist und in einer dazu parallelen Ebene eine Sohlenhalterung (14) vorgesehen ist, wobei Stützlehre und Sohlenhalterung gegeneinander preßbar vorgesehen sind.

7. Vorrichtung nach Anspruch 6, dadurch gekennzeichnet, daß die Stützlehre aus in einer Ebene (8) verstellbaren einzelnen Stützen besteht.

8. Vorrichtung nach Anspruch 7, dadurch gekennzeichnet, daß die Stützen (15) aneinander kettengliedartig angelenkt sind.

9. Vorrichtung nach einem der Ansprüche 7 oder 8, dadurch gekennzeichnet, daß die Stützen (15) auf einer Grundplatte (8) in unterschiedlichen Lagen Feststellbar angeordnet sind.

10. Vorrichtung nach einem der vorhergehenden Ansprüche, dadurch gekennzeichnet, daß am Gestell (8, 9, 10) zwischen der Stützlehre (15) und der Sohlenhalterung (14) in einer parallelen Ebene ein beheizter Spiegel (22) in der Ebene seitlich ausschwenkbar sowie quer zu den Ebenen frei verschiebbar gelagert angeordnet ist.

11. Vorrichtung nach Anspruch 10, dadurch gekennzeichnet, daß ein den Schweißspiegel (22) im Abstand der Stützlehre (15) haltender ausschaltbarer erster Anschlag (24) vorgesehen ist.

12. Vorrichtung nach Anspruch 11, dadurch gekennzeichnet, daß ein zweiter Anschlag (25) zur Abstützung des Schweißspiegels (22) gegenüber der Stützlehre (15) zur Begrenzung der Einschmelztiefe des Bandes (3) vorgesehen ist.

Fig 1

Fig 2

Fig 3

Fig 4

Fig 6

Fig 7

Fig 5

EP 0 297 467 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | US-A-4 346 762 (TOVIM)<br>* Spalte 2, Zeile 34 - Spalte 3, Zeile 10; Figuren 1-11 * | 1 | A 01 L 5/00<br>A 01 L 11/00<br>B 29 C 65/20 |
| Y | DE-A-2 534 572 (HEINLEIN)<br>* Insgesamt * | 1 | |
| A | US-A-4 513 824 (FORD)<br>* Spalte 5, Zeile 19 - Spalte 5, Zeile 62; Figuren 2,4-6 * | 1,2 | |
| A | US-A-4 429 749 (NELMS)<br>* Insgesamt * | 3,6,7,8 | |
| A | US-A-3 682 748 (KIMBALL)<br>* Insgesamt * | 5,6,10, 11,12 | |
| A,D | EP-A-0 181 522 (STÜBBE)<br>& DE-A-3 441 417 | | |

**RECHERCHIERTE SACHGEBIETE (Int. Cl.4)**

A 01 L
B 29 C

Der vorliegende Recherchenbericht wurde für alle Patentansprüche erstellt

| Recherchenort | Abschlußdatum der Recherche | Prüfer |
|---|---|---|
| DEN HAAG | 27-09-1988 | VON ARX V.U. |